# EUROPEAN PATENT SPECIFICATION

(11) **EP 3 016 491 B1**
(45) Date of publication and mention of the grant of the patent: **21.08.2019**
(21) Application number: 14820448.0
(22) Date of filing: 02.07.2014
(51) Int. Cl.: A01B 73/04

(54) **AGRICULTURAL IMPLEMENT AND METHOD OF RETRACTING OR EXPANDING A FRAME SECTION OF AN AGRICULTURAL IMPLEMENT**
LANDWIRTSCHAFTLICHES ELEMENT UND VERFAHREN ZUR RETRAKTION ODER ERWEITERUNG EINES RAHMENABSCHNITTS EINES LANDWIRTSCHAFTLICHEN ELEMENTS
EQUIPEMENT AGRICOLE ET PROCÉDÉ POUR RÉTRACTER OU DÉPLOYER UNE PARTIE DU BÂTI D'UN ÉQUIPEMENT AGRICOLE

(30) Priority: 04.07.2013 SE 1350836
(43) Date of publication of application: 11.05.2016
(73) Proprietor: Väderstad Holding AB, 590 21 Väderstad (SE)
(72) Inventor: ANDERSSON, Leif, 387 93 Borgholm (SE); PETTERSSON, Jesper, 591 36 Motala (SE)
(74) Representative: AWA Sweden AB
(86) International application number: PCT/SE2014/050842
(87) International publication number: WO 2015/002601

(56) References cited:
- EP-A1- 1 776 853
- EP-A1- 1 776 853
- EP-A2- 2 380 423
- EP-A2- 2 380 423
- GB-A- 2 493 964
- GB-A- 2 493 964
- US-A- 4 213 506
- US-A- 4 213 506
- US-A- 4 479 554
- US-A- 4 479 554
- US-A- 4 512 416
- US-A- 4 512 416
- US-A- 4 862 758
- US-A- 4 862 758
- US-A- 6 089 329
- US-A- 6 089 329

## Description

### Technical field

The present document relates to an agricultural implement having two or more frame sections, which are rotatable relative to one another. The document also relates to a method of retracting and/or extending a frame section of an agricultural implement of this kind.

### Background

Agricultural implements having mutually rotatable frame sections are known and are used, for example, to produce agricultural implements which have a largest possible working width, yet, at the same time, a smallest possible width and/or height during road transport.

A type of agricultural implement having mutually rotatable frame sections can comprise two frame sections, which are both rotatable through 90° between a horizontal working position and a substantially vertical transport position. Another type of agricultural implement having mutually rotatable frame sections can comprise three frame sections, whereof one is fixedly horizontal and two are rotatable through 90° between a horizontal working position and a substantially vertical transport position. A third type of agricultural implement having mutually rotatable frame sections can comprise five frame sections, whereof one is fixedly horizontal, two are rotatable through 90° between a horizontal working position and a substantially vertical transport position and two are rotatable through 180° relative to the frame sections which are rotatable through 90°.

Especially the third type of agricultural implement is associated with challenges: a mutual "double folding" of two retractable frame sections calls for a mutual rotary movement of around 180°, which in turn requires the top side of the agricultural implement to have limited upwardly protruding parts, since these can otherwise hinder full retraction. This means in turn that the actuator of the retraction mechanism may need to work with less favorable lever arms, which leads to increased force requirement and thus to increased risk of wear and damage, as well as to the possibility of having to use more expensive components.

A further challenge with this third type of agricultural implement is that there is a desire to produce a pressure against the ground which is as even as possible over the whole of the agricultural implement.

Another challenge is that there is a desire to make the agricultural implement flexible, that is to say that it shall be able to change shape somewhat in order to follow height variations of the ground which is being cultivated.

EP 2380423 A2 describes a hinge mechanism intended for folding of a frame of an agricultural implement. The mechanism comprises a plurality of connected frame sections, which can move in relation to one another, and also purpose-built actuators.

US 6089329 A describes a device for transferring the weight of an agricultural implement comprising a plurality of wing sections. Actuators are employed in the retraction and extension of sections of the implement.

### Summary

One object is therefore to provide an improved agricultural implement and, in particular, an agricultural implement which brings improvements with respect to one or more of the above challenges or desires.

The invention is defined by the appended independent patent claims. Embodiments emerge from the dependent patent claims, from the following description and from the drawings.

According to a first aspect, there is provided an agricultural implement comprising a first frame section, a second frame section, which is rotatably connected to the first frame section, a first link device, which is movable relative to the first frame section, a second link device, which is connected to the first link device and also to the second frame section, and an actuator, which is arranged to produce a relative movement between the first frame section and the first link device. The second link device has first and second portions which are movable relative to each other, so that a distance between the first and second portions is variable.

Parts which are not expressly said to be resilient shall be regarded as rigid, i.e. the dimensional changes which these undergo under the influence of the forces to which they are subjected in the current application are negligible.

The frame sections can be rotatable about a substantially horizontal axis. For example, the horizontal axis can run substantially parallel with a direction of travel of the agricultural implement. Alternatively, the horizontal axis can run substantially perpendicularly, or obliquely, to the direction of travel.

By varying the length of the second link device, it is on the one hand possible to allow the frame sections to move relative to each other in the extended state, which helps to make the agricultural implement flexible, while on the other hand it is possible to combine a favorable lever arm in the initial retraction or extension of the frame sections with a minimal profile in the fully retracted state.

By virtue of the fact that a first portion of the first link device is fastened relative to the first frame section, the first link device can be rotatably and/or displaceably movable relative to the first frame section. The same can be attained between the second link device and the second frame section by virtue of the fact that a first and second portion of the second link device are fastened relative to the second frame section, with the result that said second link device is rotatably and/or displaceably connected to the first link device and also to the second frame section. The actuator can be rotatably and/or displaceably connected to the first frame section and also to the first link device. The second link device can comprise a first part, which has the first portion, and a second part, which has the second portion and which is movably connected to the first part.

The first and second parts of the second link device are telescopically movable relative to each other.

The second link device comprises a first resilient element, which is arranged to pretension the first and second portions of the second link device in the direction away from each other.

By pretensioning the portions of the second link device away from each other, it is possible to obtain a pretensioning of the second frame section against the ground, and thus distribution of the ground pressure between the frame portions.

The first resilient element can be arranged to pretension the first and second portions of the second link device in the direction away from each other only over a first part-quantity of the variable distance between the first and second portions.

The first resilient element can be arranged to pretension the first and second portions of the second link device in the direction away from each other when the agricultural implement is in a working position, and/or when the frame sections have an angle relative to each other which is greater than 90° and less than 180°.

A mutual angle of rotation of 0° is deemed to exist when the respective principal planes of the frame portions are substantially parallel with each other.

The second link device can comprise a second resilient element, which is arranged to pretension the first and second portions of the second link device in the direction toward each other.

Pretensioning of the portions against each other helps to reduce the load upon the frame sections, for example, if the second frame section is rotated too far, or in the position of equilibrium which occurs approximately halfway through a retraction or extension operation.

The second resilient element can be arranged to pretension the first and second portions of the second link device in the direction toward each other only over a second part-quantity of the variable distance between the first and second portions.

The second resilient element can be arranged to pretension the first and second portions of the second link device in the direction toward each other when the frame sections have an angle relative to each other which is less than 90° and/or when the frame sections are fully retracted.

The first link device and second link device can be arranged such that, when the first and second portions of the second link device move away from each other, the lever arm of the actuator with respect to the connection of the first link device to the first frame section increases.

The agricultural implement can further comprise movement-limiting members arranged to limit the movable connection between the first and second parts of the second link device.

The agricultural implement can further comprise a damper for damping a movement between the first and second portions of the second link device.

A first portion of the first link device can be connected to the first frame section, and a second portion of the first link device can be connected to a second part of the actuator, which is controllably movable relative to the first part of the actuator.

The first portion of the second link device can be connected to the second frame section, and the second portion of the second link device can be connected to the second part of the actuator or to the second portion of the first link device.

The first frame section can be an inner retractable frame section of the agricultural implement.

The second frame section can be an outer retractable frame section of the agricultural implement.

The first and second frame sections can be rotatable relative to each other over an angle of rotation corresponding to around -15° - 190°, preferably around -15° - 185°, around -10° - 180° or around -5° - 175°.

Each of the frame sections 12a, 12b, 13a, 13b can support at least one soil-cultivating tool.

The soil-cultivating tools can be, for example, in the form of tines, disks, levellers, roller cylinders, roller wheels, sowing disks, furrow openers, compactor wheels, fertilizer coulters, weed killer coulters or nozzles for fertilizer and/or weed killer, or combinations thereof.

According to a second aspect, there is provided a method of retracting or extending a frame section of an agricultural implement comprising first and second frame sections which are rotatably connected to each other. The method comprises, with the aid of an actuator, applying a first force to a first link device such that the first link device is rotated relative to the first frame section; via a second link device, applying a second force between the first link device and the second frame section such that the second frame section, as a consequence of the rotation of the first link device, is rotated relative to the first frame section; and varying a length of the second link device while the force is applied between the second frame section and the first link device.

The linear force, and thus also the force between the second frame section and the first link device, can be a compressive force or tensile force.

The length of the second link device can be allowed to vary by a relative movement between first and second parts of the second link device.

The relative movement can be executed under the influence of a resilient element acting between the first and second parts, and/or a damping element.

In the method, a first portion of the actuator is fastened relative to the first frame section such that the first link device is rotatably and/or displaceably movable relative to the first frame section. A first and also second portion of the second link device is fastened relative to the second frame section such that the second link device is rotatably and/or displaceably connected to the first link device and also to the second frame section. The length of the second link device is variable as a result of a telescopic movement of a first and second part of the second link device relative to each other, wherein a first resilient element of the second link device pretensions the first and second portions of the second link device in the direction away from each other while a force is applied between the second frame section and the first link device.

### Brief description of the drawings

Fig. 1 is a perspective view, obliquely from the rear, of an agricultural implement 1 comprising five sections 11, 12a, 12b, 13a, 13b.
Fig. 2 is a perspective view, obliquely from the rear, of a detail of the agricultural implement 1 in fig. 1.
Fig. 3 is a basic diagram of a mechanism for folding of frame portions 12a, 13a of an agricultural implement.
Figs. 4a-4c show a link device 20 in different load states.
Figs. 5-7 show a sectional view of the agricultural implement 1 taken transversely to a direction of travel when the agricultural implement is in an extended state.
Figs. 8-9 show a sectional view of the agricultural implement 1 taken transversely to the direction of travel when the agricultural implement is in a partially folded-up state.
Figs. 10-11 show a sectional view of the agricultural implement 1 taken transversely to the direction of travel when the agricultural implement is in a fully folded-up state.

### Description of embodiments

An agricultural implement 1 comprising five laterally adjacent frame sections 11, 12a, 12b, 13a, 13b will be described below. It will be appreciated that the concept which is shown herein can also be applied to agricultural implements having more or fewer frame sections than five, as well as to agricultural implements in which the frame sections are arranged in another direction, such as frontward or rearward relative to the direction of travel of the agricultural implement.

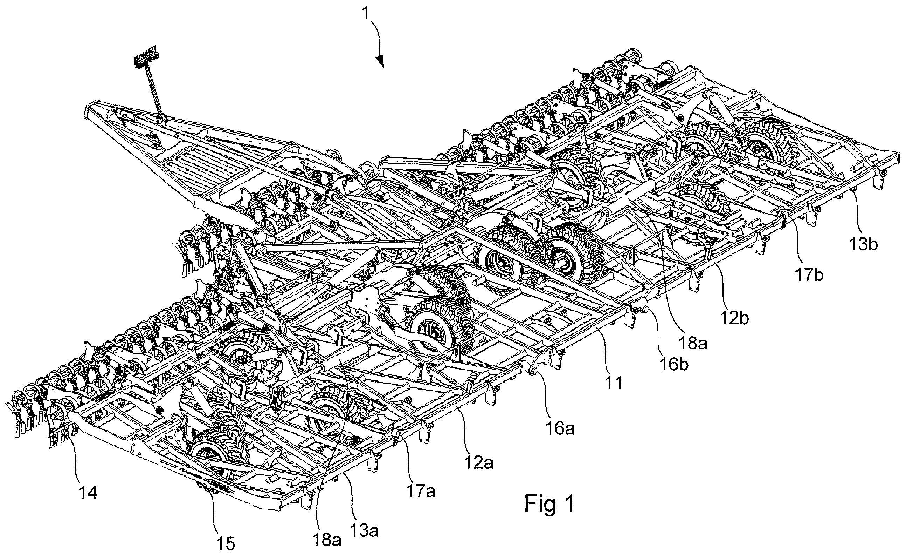

Fig. 1 shows a perspective view of an agricultural implement in the form of a harrow viewed from above and obliquely from the rear. The agricultural implement can have a plurality of tools 14, and also one or more wheels 15. The tools 14 can be in the form of tines, disks, levelers, roller cylinders, roller wheels, or combinations thereof. In an alternative agricultural implement in the form of a seed drill, the tools 14, by way of alternative or complement, can be in the form of sowing disks, furrow openers, compactor wheels or the like. In a further alternative agricultural implement in the form of a fertilizer or weed killer spreader, the tools 14, by way of alternative or complement, can be in the form of fertilizer coulters, weed killer coulters, or nozzles for fertilizer and/or weed killer.

The frame of the agricultural implement 1 here comprises a middle frame section 11, a pair of inner side frame sections 12a, 12b, and also a pair of outer side frame sections 13a, 13b.

The inner side frame sections 12a, 12b are rotatable through 90° relative to the middle frame section 11 about respective first joints 16a, 16b, which define respective first rotational axes which are substantially horizontal and parallel with the direction of travel of the agricultural implement 1.

The outer side frame sections 13a, 13b are rotatable through 180° relative to the respective inner side frame section 12a, 12b about respective second joints 17a, 17b, which define respective second rotational axes which are substantially horizontal and parallel with the direction of travel of the agricultural implement 1.

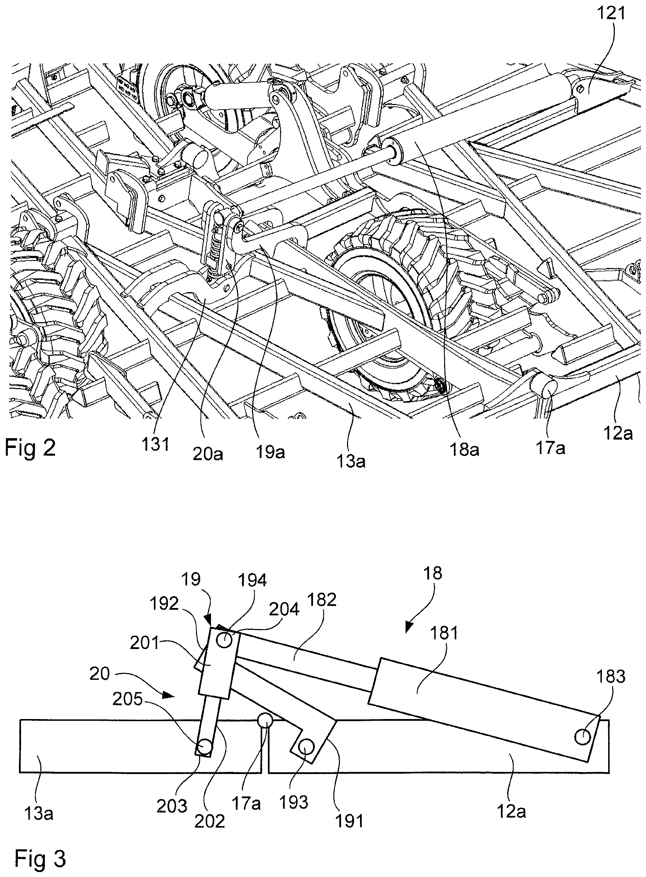

Fig. 2 shows a detailed view from fig. 1, in which the mechanism for folding a second frame section 13a in relation to a first frame section 12a is shown.

The mechanism comprises a joint 17a, about which the frame sections 12a, 13a are rotatable relative to each other; an actuator 18a, a first link device 19 and a second link device 20.

The actuator 18a is fastened relative to the first frame section 12a via a fastening lug 121, which can be integral with the first frame section.

With reference to fig. 3, the fastening of the actuator 18 can be such that the actuator 18a is movable relative to the first frame section 12a, for example rotatable and/or displaceable. In the shown example, the fastening has the form of a joint 183. The actuator 18 can comprise first and second parts, which are displaceable relative to each other, and in which a first part forms an actuator cylinder 181 into which a piston rod 182 can be slidably inserted. The actuator can have the form of a hydraulic, pneumatic or electrically driven linear actuator, such as a piston cylinder. Linear actuators of this kind are known and will not be described in more detail.

The first link device 19, in a first portion 191 thereof, is fastened relative to the first frame section 12a. The fastening can be such that the first link device 19 is movable relative to the first frame section 12a, for example rotatable and/or displaceable. In the shown example, the fastening has the form of a joint 193.

The first link device 19 has first and second portions 191, 192, which are at a distance apart. For example, the portions 191, 192 can constitute those portions of the first link device 19 which are situated furthest away from one another. The first link device is therefore preferably elongate, but can be shaped to fit against/amongst other parts of the agricultural implement. In the shown example, the first link device 19 is substantially S-shaped, which makes it possible for this to run around a longitudinal beam of the agricultural implement 1.

The actuator 18 can be fastened relative to the first link device 19 on the second portion 192 of the first link device. The fastening can be such that the actuator 18 is movable relative to the first link device 19, for example rotatable and/or displaceable. In the shown example, the fastening has the form of a joint 194.

The first link device 19 can be configured as a substantially rigid component, for example of steel.

By activation of the actuator 18, the first link device 19 is therefore rotatable about the joint 193.

A second link device 20, in a first portion 203 thereof, is fastened relative to the second frame section 13a. The fastening can be such that the second link device 20 is movable relative to the second frame section 13a, for example rotatable and/or displaceable. In the shown example, the fastening has the form of a joint 205.

The second link device 20 has first and second portions 203, 204, which are at a distance apart. For example, the portions 203, 204 can constitute those portions of the second link device 20 which are situated furthest away from one another. The second link device 20 is therefore preferably elongate.

The second link device 20, in the second portion 204 thereof, can be fastened to the second portion 192 of the first link device 19. The fastening can be such that the second link device 20 is movable relative to the first link device 19, for example rotatable and/or displaceable. In the shown example, the fastening has the form of a joint 194.

The first and second portions 203, 204 of the second link device 20 can be movable relative to each other, so that a distance between the portions 203, 204 is variable.

For example, the second link device 20 can comprise a first part 201 and a second part 202, which are telescopically displaceable relative to each other.

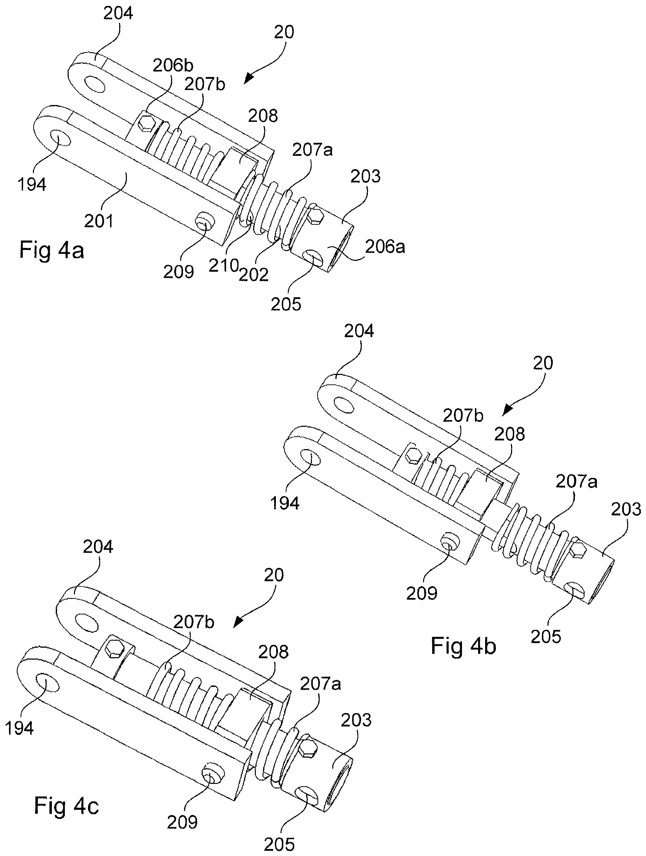

With reference to figs. 4a-4c, an embodiment of a second link device 20 is shown in three different load situations.

According to the shown example, the first part 201 is configured such that the second part 202 can be slidably inserted into the first part, so that the distance between the first and second portions 203, 204 of the second link device is variable. The first part 201 can comprise a bracing portion 208, which is integral with the side portions of the first part and which has a through hole in which the second part 202 can be slidably received.

The second part can have a longitudinal recess 210, which can cooperate with a guide pin 209 such that an axial relative movement between the first and second parts 201, 202 is limited.

The second part can have respective bracing portions 206a, 206b. The bracing portion 206a forming the first portion 203 of the second link device can form a part of the joint 205 with which the second link device 20 is fastened relative to the second frame section 13a.

The second link device 20 can further comprise a first resilient element 207a, which here has the form of a helical spring. The helical spring can have planed end portions, which cooperate with the first bracing portion 206a of the second part and also a first side of the bracing portion 208 of the first part, so that the helical spring pretensions the first and second portions 203, 204 away from each other when the second part 202 is inserted into the first part 201 or when a compressive force is applied between the first and second portions 203, 204.

The second link device 20 can further comprise a second resilient element 207b, which here has the form of a helical spring. The helical spring can have planed end portions, which cooperate with the second bracing portion 206b of the second part and also a second side of the bracing portion 208 of the first part, so that the helical spring pretensions the first and second portions 203, 204 against each other when the second part 202 is extracted from the first part 201 or when a tensile force is applied between the first and second portions.

In fig. 4a, the second link device 20 is shown in a position of equilibrium, i.e. in a situation in which the mutual position of the first and second parts 201, 202 is wholly determined by the presence of an equilibrium between the resilient elements 207a, 207b.

The resilient elements 207a, 207b can be arranged such that, at least in, or within a region around, the position of equilibrium, they work against each other, i.e. pretensioning is present in both directions.

Alternatively, the resilient elements can be arranged such that, in the position of equilibrium, they are substantially free from load and thus, in the position of equilibrium, produce no pretensioning at all.

In fig. 4b, the second link device 20 is shown in an extended position, in which the second spring element 207b is compressed and thus pretensions the first and second portions 203, 204 against each other. The first spring element 207a here has no contact with the brace 208 and is thus wholly without load in the axial direction.

In fig. 4c, the second link device 20 is shown in a compressed position, in which the first spring element 207a is compressed and thus pretensions the first and second portions 203, 204 away from each other. The second spring element 207a here has no contact with the second bracing portion 206b of the second part and is thus wholly without load in the axial direction.

It will be appreciated that the spring elements 207a, 207b can have the same or different lengths and/or spring characteristics.

It will further be appreciated that, in the shown example, the spring elements 207a, 207b work in compression mode. It is possible, however, to make one or both spring elements 207a, 207b work in traction mode instead, which would then require some form of fastening between respective spring elements 207a, 207b and respective braces 206a, 208; 206b, 208.

It will further be appreciated that, even though coil springs have been shown herein, other types of resilient elements, such as cup springs, rubber springs, annular springs or conical coil springs, can be used. Gas springs, too, can be used.

By way of alternative or complement to resilient elements, damping elements can be used. For example, a gas-based or liquid-based damper can be used to damp the relative movement of the first and second portions 203, 204. It will be appreciated that if the resilient element 207a, 207b is constituted by a rubber spring or a conical coil spring, hysteresis can be obtained.

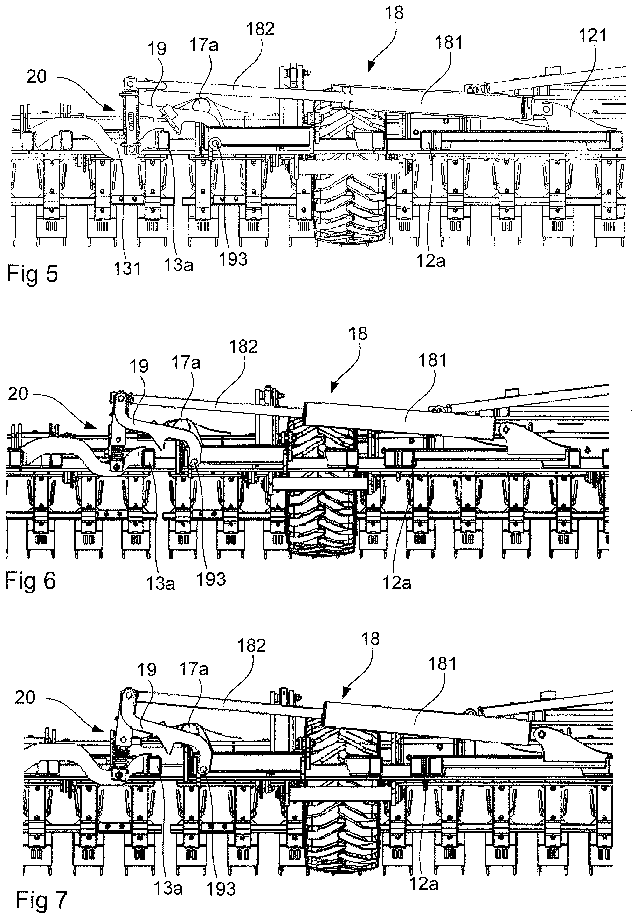

Fig. 5 shows the agricultural implement 1 in a first extreme position, in which the second frame section 13a is pretensioned against the ground (not marked), which derives from the fact that the guide pin 209 is in a lower position in the recess 210, i.e. in the state which is shown in fig. 4c. The first spring element 207a thus pretensions the first and second portions 203, 204 maximally away from each other, which means that the second frame section 13a is pressed down against the ground.

Increased ground pressure from the second frame section 13a, 13b and reduced ground pressure upon the first frame section 12a, 12b is therefore obtained, which leads to a more even distribution of the ground pressure over the width of the agricultural implement 1, and thus improved flexibility during travel on fields with height variations. The distribution can be controlled by choice of the spring characteristic of the first spring element 207a and the lengths and angles of application of the link parts 19a, 19b, 20a, 20b.

Fig. 6. shows the agricultural implement 1 with the second link device 20 in a position of equilibrium, corresponding to fig. 4a.

Fig. 7. shows the agricultural implement with the second link device 20 in a second extreme position, in which the second frame section 13a is about to be lifted from the ground. Here the second spring element 207a pretensions the first and second portions 203, 204 against each other and the guide pin 209 is in an upper position in the recess 210, i.e. in the state which is shown in fig. 4b.

In a comparison between figs. 5, 6 and 7, it is evident that the lever arm with which the actuator 18 acts around the joint 193 is greater in fig. 7 than in fig. 5, despite the fact that the frame section 13a has not yet begun to be lifted. A more favorable force position for the actuator 18 is therefore obtained, which means that a less powerful actuator can be used, and/or that the risk of wear on the actuator 18 is reduced, since, during the initial part of the lifting phase (figs. 5-7), the actuator works only against the second spring element 207b and the frame begins to be lifted only once the second spring element 207b has been fully compressed and/or once the guide pin 209 has reached the upper end position in the recess 210.

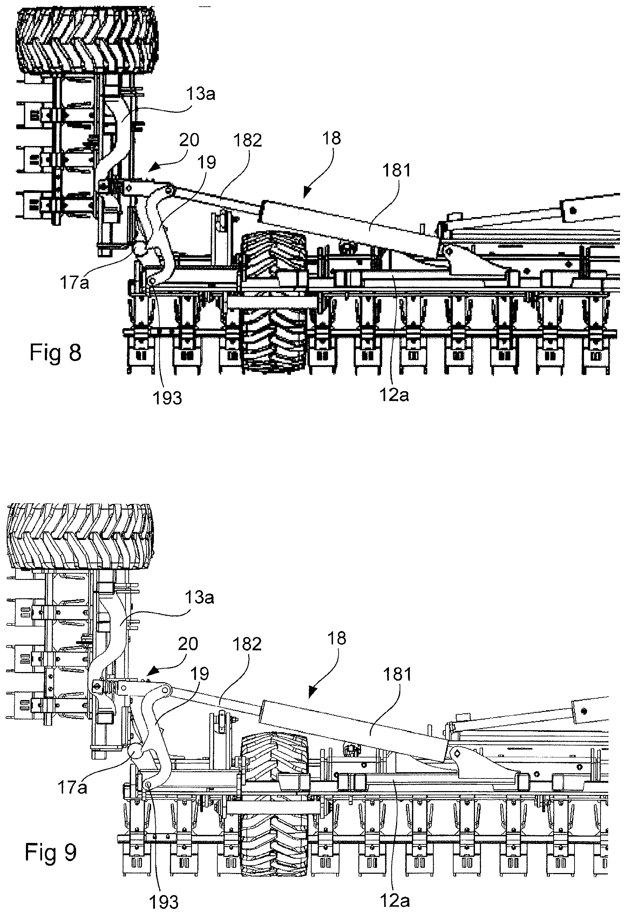

Fig. 8 shows the agricultural implement in a situation in which the frame section 13a is lifted almost 90° from the horizontal position in figs. 5-7. In this state, it is principally the second spring element 207b which pretensions the first and second portions 203, 204 of the second link device 20 against each other.

Fig. 9 shows the agricultural implement in a situation in which the frame section 13a is lifted slightly more than 90° from the horizontal position in figs. 5-7. In this state, it is principally the first spring element 207a which pretensions the first and second portions 203, 204 of the second link device 20 away from each other.

By making the two spring elements work against each other in a position of equilibrium, a smoother transition between the states in fig. 8 and fig. 9 is obtained. In this regard, a damper element, such as has been discussed above, can also be advantageous.

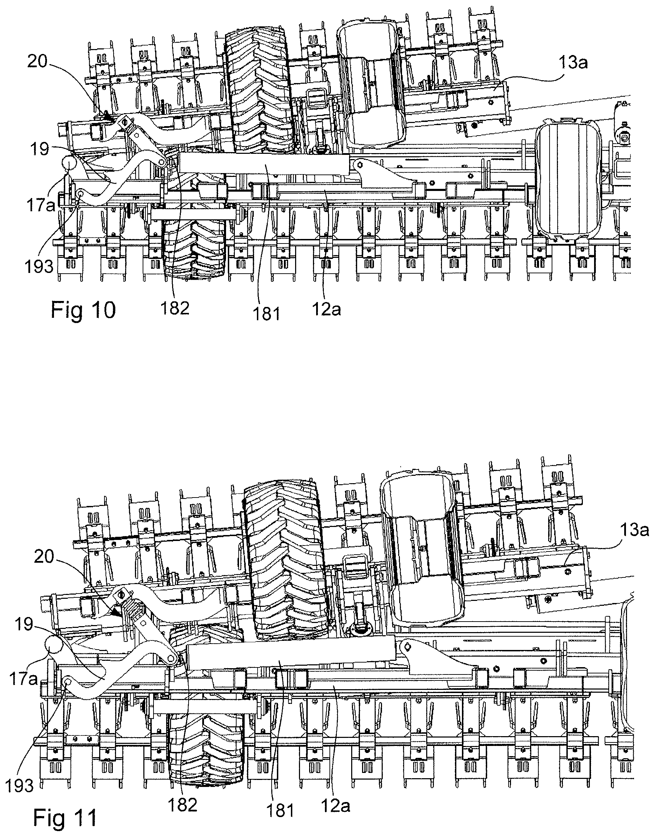

Fig. 10 shows the agricultural implement in a situation in which the frame section 13a has been folded almost 180° from the horizontal position in figs. 5-7. In this state, it is the first spring element 207a which pretensions the first and second portions 203, 204 of the second link device 20 away from each other. In this situation, the second spring element is wholly without load (corresponding to fig. 4c).

Fig. 10 also represents a situation in which the actuator 18 has been activated for extension of the frame section 13a.

Fig. 11 shows the agricultural implement in a situation in which the frame section 13a has been fully folded from the horizontal position in figs. 5-7. In this state, the second spring element 207b pretensions the first and second portions 203, 204 of the second link device 20 against each other. As can be seen from fig. 11, the first spring element is wholly without load (corresponding to fig. 4b). The fact that the second spring element 207b pretensions the first and second portions 203, 204 against each other means that the frame portions 13a, 12a also come to be pretensioned against each other, which reduces the risk of play and wear if also the first frame portion 12a is retracted.

It will be appreciated that in the extension process the same effect is obtained as in the retraction process (figs. 5-7), i.e. the second link device 20 is initially in a state (fig. 11) in which the first spring element 207a is without load, wherein the actuator, during an initial phase, will work only against the first spring element 207a until this has been fully compressed and/or until such time as the guide pin 209 has reached the lower end position in the recess 210, viewed according to figs. 5-7.

It will be appreciated that it can be expedient to provide one or more damper elements, for example in the form of rubber blocks or the like, which in the retracted position act as buffers between the first and second frame portions 12a, 13a and which can be compressed with the aid of the force from the actuator 18 and/or the spring element 207b.

## Claims

1. An agricultural implement (1) comprising:
a first frame section (12a, 12b),
a second frame section (13a, 13b), which is rotatably connected to the first frame section (12a, 12b),
a first link device (19), which is movable relative to the first frame section,
a second link device (20), which is connected to the first link device and also to the second frame section (13a, 13b), and
an actuator (18), which is arranged to produce a relative movement between the first frame section (12a, 12b) and the first link device (19),
in that the second link device (20) has first and second portions (203, 204) which are movable relative to each other, so that a distance between the first and second portions (203, 204) is variable,
a first portion (191) of the first link device (19) is fastened relative to the first frame section so that the first link device (19) is rotatably and/or displaceably movable relative to the first frame section,
a first and also second portion (203, 204) of the second link device (20) are fastened relative to the second frame section so that the second link device (20) is rotatably and/or displaceably connected to the first link device, and also to the second frame section (13a, 13b),
the actuator is rotatably and/or displaceably connected to the first frame section and also to the first link device,
the second link device comprises a first part (201), which has the first portion (203), and a second part (202), which has the second portion (204) and which is movably connected to the first part, **characterized in that** the first and second parts of the second link device are telescopically movable relative to each other, and
the second link device (20) comprises a first resilient element (207a), which is arranged to pretension the first and second portions (203, 204) of the second link device (20) in the direction away from each other.

2. The agricultural implement as claimed in claim 1, wherein the first resilient element (207a) is arranged to pretension the first and second portions (203, 204) of the second link device (20) in the direction away from each other only over a first part-quantity of the variable distance between the first and second portions (203, 204), or to pretension the first and second portions (203, 204) of the second link device (20) in the direction away from each other when the agricultural implement is in a working position, and/or when the frame sections have an angle relative to each other which is greater than 90° and less than 180°.

3. The agricultural implement as claimed in any one of the preceding claims, wherein the second link device (20) comprises a second resilient element (207b), which is arranged to pretension the first and second portions (203, 204) of the second link device (20) in the direction toward each other.

4. The agricultural implement as claimed in claim 3, wherein the second resilient element (207b) is arranged to pretension the first and second portions (203, 204) of the second link device (20) in the direction toward each other only over a second part-quantity of the variable distance between the first and second portions (203, 204), or to pretension the first and second portions (203, 204) of the second link device (20) in the direction toward each other when the frame sections have an angle relative to each other which is less than 90° and/or when the frame sections are fully retracted.

5. The agricultural implement as claimed in any one of the preceding claims, wherein the first link device (19) and second link device (20) are arranged such that, when the first and second portions (203, 204) of the second link device (20) move away from each other, the lever arm of the actuator (18) with respect to the connection (193) of the first link device (19) to the first frame section (12a, 12b) increases.

6. The agricultural implement as claimed in any one of the preceding claims, further comprising movement-limiting members (209, 210) arranged to limit the movable connection between the first and second parts (201, 202) of the second link device.

7. The agricultural implement as claimed in any one of the preceding claims, further comprising a damper for damping a movement between the first and second portions (203, 204) of the second link device (20).

8. The agricultural implement as claimed in any one of the preceding claims, wherein a first portion (191) of the first link device is connected to the first frame section (12a, 12b), and wherein a second portion (192) of the first link device is connected to a second part (182) of the actuator (18), which is controllably movable relative to the first part (181) of the actuator (18).

9. The agricultural implement as claimed in any one of the preceding claims, wherein the first portion (203) of the second link device (20) is connected to the second frame section (13a, 13b), and wherein the second portion (204) of the second link device (20) is connected to the second part (182) of the actuator (18) or to the second portion (192) of the first link device (19).

10. The agricultural implement as claimed in any one of the preceding claims, wherein the first frame section (12a) is an inner retractable frame section of the agricultural implement (1) and wherein said inner retractable frame section supports at least one soil cultivating tool, and wherein the second frame section is an outer retractable frame section of the agricultural implement (1) and wherein said outer retractable frame section supports at least one soil cultivating tool.

11. The agricultural implement as claimed in any one of the preceding claims, wherein the first and second frame sections (12a, 12b; 13a, 13b) are rotatable relative to each other over an angle of rotation corresponding to around -15° - 190°, preferably around -15° - 185°, around -10° - 180° or around -5° - 175°.

12. A method of retracting or extending a frame section of an agricultural implement comprising first and second frame sections (12a, 12b, 13a, 13b) which are rotatably connected to each other, which method comprises:
with the aid of an actuator (18), applying a first force to a first link device (19) such that the first link device (19) is rotated relative to the first frame section (12a, 12b),
via a second link device (20), applying a second force between the first link device (19) and the second frame section (13a, 13b) such that the second frame section (13a, 13b), as a consequence of the rotation of the first link device (19), is rotated relative to the first frame section (12a, 12b), and
varying a length of the second link device (20) while the force is applied between the second frame section (13a, 13b) and the first link device (19),
a first portion (191) of the actuator (18) is fastened relative to the first frame section such that the first link device (19) is rotatably and/or displaceably movable relative to the first frame section,
a first and also second portion (203, 204) of the second link device (20) are fastened relative to the second frame section such that the second link device (20) is rotatably and/or displaceably connected to the first link device and also to the second frame section (13a, 13b), **characterized in that**
the length of the second link device (20) varies as a result of a telescopic movement of a first and second part (201, 202) of the second link device relative to each other, wherein a first resilient element (207a) of the second link device pretensions the first and second portions (203, 204) of the second link device (20) in the direction away from each other while said force is applied between the second frame section (13a, 13b) and the first link device (19).

13. The method as claimed in claim 12, wherein the length of the second link device (20) is allowed to vary by a relative movement between first and second parts (201, 202) of the second link device (20).

## Patentansprüche

1. Landwirtschaftliches Gerät (1), umfassend:
einen ersten Rahmenabschnitt (12a, 12b),
einen zweiten Rahmenabschnitt (13a, 13b), der mit dem ersten Rahmenabschnitt (12a, 12b) drehbar verbunden ist,
eine erste Verbindungsvorrichtung (19), die relativ zu dem ersten Rahmenabschnitt bewegbar ist,
eine zweite Verbindungsvorrichtung (20), die mit der ersten Verbindungsvorrichtung und auch mit dem zweiten Rahmenabschnitt (13a, 13b) verbunden ist, und
ein Stellglied (18), das angeordnet ist, um eine relative Bewegung zwischen dem ersten Rahmenabschnitt (12a, 12b) und der ersten Verbindungsvorrichtung (19) zu erzeugen,
wobei die zweite Verbindungsvorrichtung (20) einen ersten und zweiten Abschnitt (203, 204) aufweist, die relativ zueinander derart bewegbar sind,
dass ein Abstand zwischen dem ersten und zweiten Abschnitt (203, 204) variabel ist,
wobei ein erster Abschnitt (191) der ersten Verbindungsvorrichtung (19) relativ zu dem ersten Rahmenabschnitt derart befestigt ist, dass die erste Verbindungsvorrichtung (19) relativ zu dem ersten Rahmenabschnitt drehbar und/oder verschiebbar bewegbar ist,
wobei ein erster und auch ein zweiter Abschnitt (203, 204) der zweiten Verbindungsvorrichtung (20) relativ zu dem zweiten Rahmenabschnitt derart befestigt sind, dass die zweite Verbindungsvorrichtung (20) mit der ersten Verbindungsvorrichtung und auch mit dem zweiten Rahmenabschnitt (13a, 13b) drehbar und/oder verschiebbar verbunden ist,
wobei das Stellglied mit dem ersten Rahmenabschnitt und auch mit der ersten Verbindungsvorrichtung drehbar und/oder verschiebbar verbunden ist,
wobei die zweite Verbindungsvorrichtung ein erstes Teil (201), das den ersten Abschnitt (203) aufweist, und ein zweites Teil (202), das den zweiten Abschnitt (204) aufweist und das mit dem ersten Teil bewegbar verbunden ist, umfasst,
**dadurch gekennzeichnet, dass**
das erste und zweite Teil der zweiten Verbindungsvorrichtung relativ zueinander teleskopisch bewegbar sind und
die zweite Verbindungsvorrichtung (20) ein erstes elastisches Element (207a) umfasst, das angeordnet ist, um den ersten und zweiten Abschnitt (203, 204) der zweiten Verbindungsvorrichtung (20) in die Richtung weg voneinander vorzuspannen.

2. Landwirtschaftliches Gerät nach Anspruch 1, wobei das erste elastische Element (207a) angeordnet ist, um den ersten und zweiten Abschnitt (203, 204) der zweiten Verbindungsvorrichtung (20) in die Richtung weg voneinander nur über einen ersten Teilbetrag des variablen Abstands zwischen dem ersten und zweiten Abschnitt (203, 204) vorzuspannen oder um den ersten und zweiten Abschnitt (203, 204) der zweiten Verbindungsvorrichtung (20) in die Richtung weg voneinander vorzuspannen, wenn das landwirtschaftliche Gerät in einer Arbeitsposition ist und/oder wenn die Rahmenabschnitte einen Winkel relativ zueinander aufweisen, der größer ist als 90° und kleiner ist als 180°.

3. Landwirtschaftliches Gerät nach einem der vorhergehenden Ansprüche, wobei die zweite Verbindungsvorrichtung (20) ein zweites elastisches Element (207b) umfasst, das angeordnet ist, um den ersten und zweiten Abschnitt (203, 204) der zweiten Verbindungsvorrichtung (20) in die Richtung hin zueinander vorzuspannen.

4. Landwirtschaftliches Gerät nach Anspruch 3, wobei das zweite elastische Element (207b) angeordnet ist, um den ersten und zweiten Abschnitt (203, 204) der zweiten Verbindungsvorrichtung (20) in die Richtung hin zueinander nur über einen zweiten Teilbetrag des variablen Abstands zwischen dem ersten und zweiten Abschnitt (203, 204) vorzuspannen oder um den ersten und zweiten Abschnitt (203, 204) der zweiten Verbindungsvorrichtung (20) in die Richtung hin zueinander vorzuspannen, wenn die Rahmenabschnitte einen Winkel relativ zueinander aufweisen, der kleiner ist als 90°, und/oder wenn die Rahmenabschnitte vollständig eingezogen sind.

5. Landwirtschaftliches Gerät nach einem der vorhergehenden Ansprüche, wobei die erste Verbindungsvorrichtung (19) und zweite Verbindungsvorrichtung (20) derart angeordnet sind, dass, wenn sich der erste und zweite Abschnitt (203, 204) der zweiten Verbindungsvorrichtung (20) voneinander weg bewegen, der Hebelarm des Stellglieds (18) in Bezug auf die Verbindung (193) der ersten Verbindungsvorrichtung (19) mit dem ersten Rahmenabschnitt (12a, 12b) zunimmt.

6. Landwirtschaftliches Gerät nach einem der vorhergehenden Ansprüche, ferner umfassend bewegungsbegrenzende Elemente (209, 210), die angeordnet sind, um die bewegbare Verbindung zwischen dem ersten und zweiten Teil (201, 202) der zweiten Verbindungsvorrichtung zu begrenzen.

7. Landwirtschaftliches Gerät nach einem der vorhergehenden Ansprüche, ferner umfassend einen Dämpfer zum Dämpfen einer Bewegung zwischen dem ersten und zweiten Abschnitt (203, 204) der zweiten Verbindungsvorrichtung (20).

8. Landwirtschaftliches Gerät nach einem der vorhergehenden Ansprüche, wobei ein erster Abschnitt (191) der ersten Verbindungsvorrichtung mit dem ersten Rahmenabschnitt (12a, 12b) verbunden ist und wobei ein zweiter Abschnitt (192) der ersten Verbindungsvorrichtung mit einem zweiten Teil (182) des Stellglieds (18) verbunden ist, das relativ zu dem ersten Teil (181) des Stellglieds (18) steuerbar bewegbar ist.

9. Landwirtschaftliches Gerät nach einem der vorhergehenden Ansprüche, wobei der erste Abschnitt (203) der zweiten Verbindungsvorrichtung (20) mit dem zweiten Rahmenabschnitt (13a, 13b) verbunden ist und wobei der zweite Abschnitt (204) der zweiten Verbindungsvorrichtung (20) mit dem zweiten Teil (182) des Stellglieds (18) oder mit dem zweiten Abschnitt (192) der ersten Verbindungsvorrichtung (19) verbunden ist.

10. Landwirtschaftliches Gerät nach einem der vorhergehenden Ansprüche, wobei der erste Rahmenabschnitt (12a) ein innerer einziehbarer Rahmenabschnitt des landwirtschaftlichen Geräts (1) ist und wobei der innere einziehbare Rahmenabschnitt mindestens ein Bodenbearbeitungswerkzeug trägt und wobei der zweite Rahmenabschnitt ein äußerer einziehbarer Rahmenabschnitt des landwirtschaftlichen Geräts (1) ist und wobei der äußere einziehbare Rahmenabschnitt mindestens ein Bodenbearbeitungswerkzeug trägt.

11. Landwirtschaftliches Gerät nach einem der vorhergehenden Ansprüche, wobei der erste und zweite Rahmenabschnitt (12a, 12b; 13a, 13b) relativ zueinander über einen Drehwinkel drehbar sind, der etwa -15° - 190°, vorzugsweise etwa -15° - 185°, etwa -10° - 180° oder etwa -5° - 175° entspricht.

12. Verfahren zum Einziehen oder Ausfahren eines Rahmenabschnitts eines landwirtschaftlichen Geräts, das einen ersten und zweiten Rahmenabschnitt (12a, 12b, 13a, 13b) umfasst, die miteinander drehbar verbunden sind, wobei das Verfahren Folgendes umfasst:
mit Hilfe eines Stellglieds (18), Aufbringen einer ersten Kraft auf eine erste Verbindungsvorrichtung (19) derart, dass die erste Verbindungsvorrichtung (19) relativ zu dem ersten Rahmenabschnitt (12a, 12b) gedreht wird,
über eine zweite Verbindungsvorrichtung (20), Aufbringen einer zweiten Kraft zwischen der ersten Verbindungsvorrichtung (19) und dem zweiten Rahmenabschnitt (13a, 13b) derart, dass der zweite Rahmenabschnitt (13a, 13b), infolge der Drehung der ersten Verbindungsvorrichtung (19), relativ zu dem ersten Rahmenabschnitt (12a, 12b) gedreht wird, und
Variieren einer Länge der zweiten Verbindungsvorrichtung (20), während die Kraft zwischen dem zweiten Rahmenabschnitt (13a, 13b) und der ersten Verbindungsvorrichtung (19) aufgebracht wird,
wobei ein erster Abschnitt (191) des Stellglieds (18) relativ zu dem ersten Rahmenabschnitt derart befestigt ist, dass die erste Verbindungsvorrichtung (19) relativ zu dem ersten Rahmenabschnitt drehbar und/oder verschiebbar bewegbar ist,
wobei ein erster und auch ein zweiter Abschnitt (203, 204) der zweiten Verbindungsvorrichtung (20) relativ zu dem zweiten Rahmenabschnitt derart befestigt sind, dass die zweite Verbindungsvorrichtung (20) mit der ersten Verbindungsvorrichtung und auch mit dem zweiten Rahmenabschnitt (13a, 13b) drehbar und/oder verschiebbar verbunden ist,
**dadurch gekennzeichnet, dass**
die Länge der zweiten Verbindungsvorrichtung (20) infolge einer teleskopischen Bewegung eines ersten und zweiten Teils (201, 202) der zweiten Verbindungsvorrichtung relativ zueinander variiert, wobei ein erstes elastisches Element (207a) der zweiten Verbindungsvorrichtung den ersten und zweiten Abschnitt (203, 204) der zweiten Verbindungsvorrichtung (20) in die Richtung weg voneinander vorspannt, während die Kraft zwischen dem zweiten Rahmenabschnitt (13a, 13b) und der ersten Verbindungsvorrichtung (19) aufgebracht wird.

13. Verfahren nach Anspruch 12, wobei es der Länge der zweiten Verbindungsvorrichtung (20) erlaubt ist, durch eine relative Bewegung zwischen einem ersten und zweiten Teil (201, 202) der zweiten Verbindungsvorrichtung (20) zu variieren.

## Revendications

1. Équipement agricole (1) comprenant :
une première section de bâti (12a, 12b),
une seconde section de bâti (13a, 13b) qui est connectée de manière à pouvoir tourner à la première section de bâti (12a, 12b),
un premier dispositif de liaison (19) qui est mobile par rapport à la première section de bâti,
un second dispositif de liaison (20) qui est connecté au premier dispositif de liaison et également aussi à la seconde section de bâti (13a, 13b), et
un actionneur (18) qui est conçu pour produire un mouvement relatif entre la première section de bâti (12a, 12b) et le premier dispositif de liaison (19),
le second dispositif de liaison (20) comportant des première et seconde sections (203,204) qui sont mobiles l'une par rapport à l'autre, de sorte qu'une distance entre les première et seconde sections (203,204) est variable,
une première section (191) du premier dispositif de liaison (19) étant fixée par rapport à la première section de bâti de manière à ce que le premier dispositif de liaison (19) soit mobile de manière à pouvoir tourner et/ou être déplaçable par rapport à la première section de bâti,
une première et également une seconde section (203,204) du second dispositif de liaison (20) étant fixées par rapport à la seconde section de bâti de manière à ce que le second dispositif de liaison (20) soit connecté de manière à pouvoir tourner et/ou à être déplaçable au premier dispositif de liaison, et également à la seconde section de bâti (13a, 13b),
l'actionneur étant connecté de manière à pouvoir tourner et/ou être déplaçable à la première section de bâti et également au premier dispositif de liaison,
le second dispositif de liaison comprenant une première partie (201) qui comporte la première section (203), et une seconde partie (202) qui comporte la seconde section (204) et qui est connectée de manière mobile à la première partie, **caractérisé en ce que** les première et seconde parties du second dispositif de liaison sont mobiles de manière télescopique l'une par rapport à l'autre, et
le second dispositif de liaison (20) comprenant un premier élément résilient (207a) qui est conçu pour pré-tendre les première et seconde sections (203,204) du second dispositif de liaison (20) dans un sens d'éloignement l'une de l'autre.

2. Équipement agricole selon la revendication 1, dans lequel le premier élément résilient (207a) est conçu pour pré-tendre les première et seconde sections (203,204) du second dispositif de liaison (20) dans le sens d'éloignement l'une de l'autre seulement sur une quantité de première partie de la distance variable entre les première et seconde sections (203,204) ou de pré-tendre les première et seconde sections (203,204) du second dispositif de liaison (20) dans le sens d'éloignement l'une de l'autre lorsque l'équipement agricole est dans une position de travail, et/ou lorsque les sections de bâti décrivent l'une par rapport à l'autre un angle qui est supérieur à 90° et inférieur à 180°.

3. Équipement agricole selon l'une quelconque des revendications précédentes, dans lequel le second dispositif de liaison (20) comprend un second élément résilient (207b) qui est conçu pour pré-tendre les première et seconde sections (203,204) du second dispositif de liaison (20) dans le sens de rapprochement l'une de l'autre.

4. Équipement agricole selon la revendication 3, dans lequel le second élément résilient (207b) est conçu pour pré-tendre les première et seconde sections (203,204) du second dispositif de liaison (20) dans le sens de rapprochement l'une de l'autre seulement sur une quantité de seconde partie de la distance variable entre les première et seconde sections (203,204) ou de pré-tendre les première et seconde sections (203,204) du second dispositif de liaison (20) dans le sens de rapprochement l'une de l'autre lorsque les sections de bâti décrivent l'une par rapport à l'autre un angle qui est inférieur à 90° et/ou lorsque les sections de bâti sont entièrement rétractées.

5. Équipement agricole selon l'une quelconque des revendications précédentes, dans lequel le premier dispositif de liaison (19) et le second dispositif de liaison (20) sont disposés de manière à ce que, lorsque les première et seconde sections (203,204) du second dispositif de liaison (20) s'éloignent l'une de l'autre, le bras de levier de l'actionneur (18) par rapport à la connexion (193) du premier dispositif de liaison (19) à la première section de bâti (12a, 12b) augmente.

6. Équipement agricole selon l'une quelconque des revendications précédentes, comprenant en outre des éléments de limitation de mouvement (209,210) conçus pour limiter la connexion mobile entre les première et seconde parties (201,202) du second dispositif de liaison.

7. Équipement agricole selon l'une quelconque des revendications précédentes, comprenant en outre un amortisseur pour amortir un mouvement entre les première et seconde sections (203,204) du second dispositif de liaison (20).

8. Équipement agricole selon l'une quelconque des revendications précédentes, dans lequel une première section (191) du premier dispositif de liaison est connectée à la première section de bâti (12a, 12b) et une seconde section (192) du premier dispositif de liaison est connectée à une seconde partie (182) de l'actionneur (18), laquelle seconde partie est mobile de manière contrôlable par rapport à la première partie (181) de l'actionneur (18).

9. Équipement agricole selon l'une quelconque des revendications précédentes, dans lequel la première section (203) du second dispositif de liaison (20) est connectée à la seconde section de bâti (13a, 13b), et la seconde section (204) du second dispositif de liaison (20) est connectée à la seconde partie (182) de l'actionneur (18) ou à la seconde section (192) du premier dispositif de liaison (19).

10. Équipement agricole selon l'une quelconque des revendications précédentes, dans lequel la première section de bâti (12a) est une section de bâti rétractable intérieure de l'équipement agricole (1) et ladite section de bâti rétractable intérieure supporte au moins un outil de culture du sol, la seconde section de bâti est une section de bâti rétractable extérieure de l'équipement agricole (1) et ladite section de bâti rétractable extérieure supporte au moins un outil de culture du sol.

11. Équipement agricole selon l'une quelconque des revendications précédentes, dans lequel les première et seconde sections de bâti (12a, 12b ; 13a, 13b) peuvent tourner l'une par rapport à l'autre sur un angle de rotation correspondant à environ -15° à 190°, de préférence environ -15° à 185°, environ -10° à 180° ou environ -5° à 175°.

12. Procédé de rétraction d'une section de bâti d'un équipement agricole comprenant des première et seconde sections de bâti (12a, 12b ; 13a, 13b) qui sont connectées l'une à l'autre de manière à pouvoir tourner, lequel procédé comprend :
avec l'aide d'un actionneur (18), l'application d'une première force sur un premier dispositif de liaison (19) de manière à ce que le premier dispositif de liaison (19) tourne par rapport à la première section de bâti (12a, 12b),
via un second dispositif de liaison (20), l'application d'une seconde force entre le premier dispositif de liaison (19) et la seconde section de bâti (13a, 13b) de manière à ce que la seconde section de bâti (13a, 13b), en conséquence de la rotation du premier dispositif de liaison (19), tourne par rapport à la première section de bâti (12a, 12b), et
la variation d'une longueur du second dispositif de liaison (20) pendant que la force est appliquée entre la seconde section de bâti (13a, 13b) et le premier dispositif de liaison (19),
une première section (191) de l'actionneur (18) étant fixée par rapport à la première section de bâti de manière à ce que le premier dispositif de liaison (19) soit mobile de manière à pouvoir tourner et/ou à être déplaçable par rapport à la première section de bâti,
une première et également une seconde section (203,204) du second dispositif de liaison (20) étant fixées par rapport à la seconde section de bâti de manière à ce que le second dispositif de liaison (20) soit connecté de manière à pouvoir tourner et/ou à être déplaçable au premier dispositif de liaison et également à la seconde section de bâti (13a, 13b), **caractérisé en ce que**
la longueur du second dispositif de liaison (20) et variée en résultat d'un mouvement télescopique d'une première et d'une seconde parties (201,202) du second dispositif de liaison l'une par rapport à l'autre, un premier élément résilient (207a) du second dispositif de liaison pré-tendant les première et seconde sections (203,204) du second dispositif de liaison (20) dans le sens de l'éloignement l'une de l'autre pendant que ladite force est appliquée entre la seconde section de bâti (13a, 13b) et le premier dispositif de liaison (19).

13. Procédé selon la revendication 12, dans lequel la longueur du second dispositif de liaison (20) peut être variée par un mouvement relatif entre les première et seconde parties (201,202) du second dispositif de liaison (20).
